# EUROPEAN PATENT SPECIFICATION

(11) **EP 1 231 856 B1**
(45) Date of publication and mention of the grant of the patent: **17.09.2003**
(21) Application number: 00973030.0
(22) Date of filing: 03.11.2000
(51) Int. Cl.: A47L 9/20, A47L 9/16

(54) **DUST AND DIRT SEPARATION ASSEMBLY**
VORRICHTUNG ZUR TRENNUNG VON STAUB UND SCHMUTZ
ENSEMBLE DE SEPARATION DE POUSSIERE ET DE SALETES

(30) Priority: 04.11.1999 GB 9926009
(43) Date of publication of application: 21.08.2002
(73) Proprietor: TechTronic Industries Co., Ltd., Tsuen Wan, New Territories, Hong Kong (CN)
(72) Inventor: GREY, Nicholas Gerald, Worcestershire WR1 1JE (GB); KENT, Andrew John, Hemel Hempste ad, Hertfordshire HP2 5LE (GB)
(74) Representative: Wardley, Diana Mary
(86) International application number: PCT/GB00/04218
(87) International publication number: WO 01/032066

(56) References cited:
- EP-A- 0 860 554
- DE-A- 2 709 896
- DE-A- 3 413 213
- DE-A- 19 704 468
- FR-A- 2 736 532
- GB-A- 1 471 035
- US-A- 4 099 940
- US-A- 5 090 083
- US-A- 5 322 534
- US-A- 5 603 740
- US-A- 5 681 363

## Description

This invention relates to a dust and dirt separation assembly for use in vacuum cleaners of the kind in which dust and other debris is picked up by suction and entrained in an airflow, and subsequently separated from the air in which it is entrained at least in part by causing the airflow to pass through a filter element.

It is to be understood that such dust and dirt separation may be achieved entirely by passage of dirty air through one or more filter elements, or partly by passage of the air through other separation devices, such as a cyclone, and partly by passage through one or more filters, and the assembly in accordance with the present invention may be used alone or in combination with other filters or other separation devices.

Dust filter elements by their very nature tend to become clogged by the dust they are designed to collect and there have been various proposals for mechanisms intended to shake or otherwise agitate filter elements for the purpose of dislodging collected dust therefrom.

By way of example, EP-A-860554 discloses the use of an intermittently powered actuator to operate an element which moves a filter in a self-propelled street sweeping machine to shake the filter and remove collected dust; GB-A-1471035 discloses a vacuum cleaner with a solenoid operated shaker which is activated by a pressure switch in response to a drop in exhaust air pressure caused by partial blockage of the filter; US-A-5090083 discloses a commercial carpet cleaner with filter tubes that are normally maintained in an extended state by means of springs which are compressible under the action of a manually operable depressor plate so as to enable the filter tubes to be shaken, thereby allowing the collected matter to fall into a hopper; and US-A-5681363 discloses a filter shaking arrangement in which a vacuum cleaner dust bag is held within an elastically deformable frame which is expanded by virtue of air pressure in the filter bag, so that when the airflow is interrupted elastic contraction of the frame shakes the bag to dislodge dust from the filter material.

German patent DE 19704468 describes a dust and dirt separation assembly as part of a stationary vacuum cleaning facility. It comprises a dirt collection chamber, having a dirty air inlet and a clean air outlet with an airflow path therebetween. The airflow path passes through a first separation means for separating larger particles of dirt from the dirty air, in the form of a cyclonic separator, and a second separation means separating smaller particles of dust from the dirty air, in the form of a filter. The filter is cleaned by means of a rotating brush beneath the filter which is electrically driven. The filter is cleaned continually by that brushing action.

It is an object of the present invention to provide a simple and effective mechanism for dislodging dust from a filter element and into a dirt collection chamber, particularly in a vacuum cleaner.

According to a first aspect of the invention there is provided a dust and dirt separation assembly for use in a vacuum cleaner, the assembly having a dirt collection chamber, a dirty air inlet and a clean air outlet with an airflow path therebetween, the air flow path passing through a first separation means for separating larger particles of dirt from the dirty air such that it is collected in the dirt collection chamber, and a filter element for separating smaller particles of dust from the dirty air,
characterised in that the assembly further includes a mechanical actuation mechanism and an impact member, the impact member being actuatable via the mechanical actuation mechanism to strike the filter element to dislodge the dust from the filter element and such that the dust is collected in the dirt collection chamber with the larger particles of dirt, the mechanical actuation mechanism being selectively manually operable.

The selectively operable mechanical actuation mechanism may conveniently include a snap-acting resilient element which changes from a first, stable condition to a second condition when a sufficient force is applied.

The resilient element is conveniently spaced from the impact member until actuated, when it snaps into its second condition to strike the impact member before returning to its first condition.

The filter element may comprise a filter body made of a filter material which has non-stick properties to facilitate separation of the dust from the surface thereof the filter element is struck. Conveniently the filter material has a coating of PTFE or the like.

According to a still further aspect of the invention there is provided a vacuum cleaner including a dust and dirt separation assembly or a filter assembly according to the any of the previous aspects of the invention.

The invention will now be described by way of example only with reference to the accompanying drawings in which:
Figure 1 diagramatically illustrates an embodiment of dirt and dust assembly in transverse section;
Figure 2 is a top plan view corresponding to Figure 1, and
Figures 3 and 4 illustrate the action of a filter cleaning mechanism of the embodiment of Figure 1.

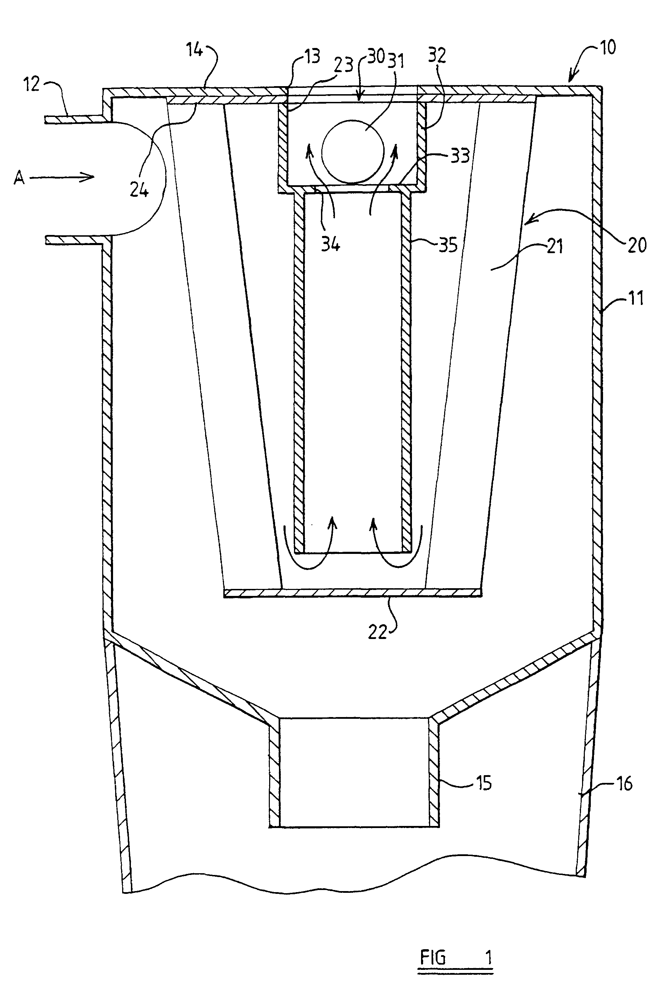

Referring to Figures 1 to 4, an embodiment of a dirt and dust separating assembly 50 is illustrated. The assembly 50 comprises an outer housing 51 with a tangential air inlet 52 and an axial air outlet 53 in a top wall 54 . An upper part 55 of the outer housing 51 acts as a cyclonic separator and a widened, lower part 56 of the outer housing 51 acts as a dirt and dust collection container, which for emptying may be removable from the upper part 55 of the outer housing 51, or have a bottom closure flap which can be opened or removed.

An inner filter housing 60 is located below and around the outlet 53. The filter housing includes an upper cylindrical part 61, which comprises a solid wall, and a lower cylindrical part 62, which comprises a mesh wall through which air can flow from the outer housing 51. The bottom of the filter housing is closed by a bottom plate 63, but below the mesh wall part 62 there are openings 64, and around the bottom plate there is a frusto-conical baffle 65.

Located within the filter housing 60 is a filter member 66 which comprises a generally cylindrical filter body 67 formed of corrugated filter material having non-stick properties, such as may be provided by a coating of PTFE or other similar material. At its upper end, the filter body 67 is attached to an annular top plate 68, which defines a central opening 69 in register with the outlet 53.

Dirty air is drawn into the outer housing 51 through the inlet 52, and in the upper part 55 the larger particles of dirt and other debris, such as hairs and fibres, are separated due to cyclonic separation, and fall down into the lower part 56 which acts as a dirt collection chamber. The air then passes through the mesh wall part 62 of the filter housing 60 and through the filter body 67 in which the fine dust in the air becomes entrapped. The clean air then passes out of the housing 50 via the outlet 53.

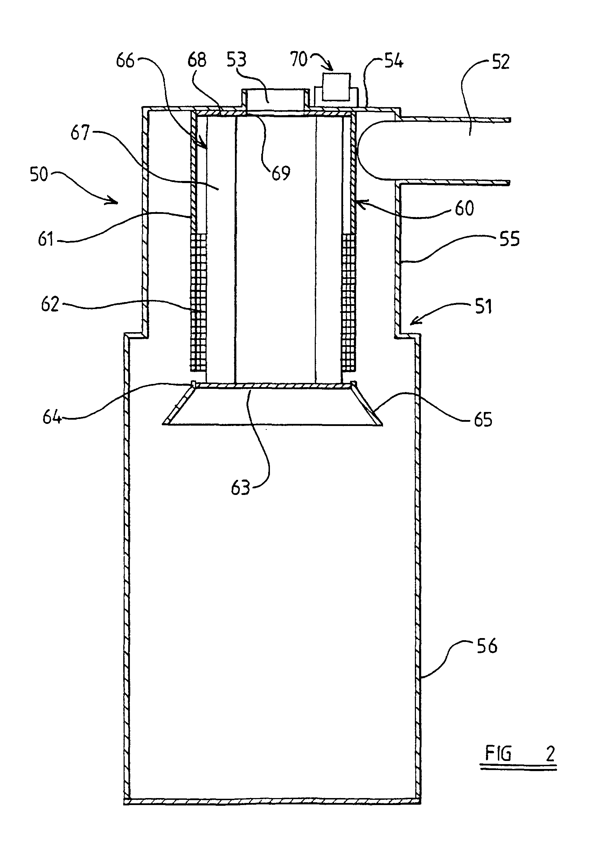

In time the filter body 67 may become clogged with the dust entrapped within it, and require cleaning, but in any event it is desirable to ensure that it is cleaned whenever the container 56 is to be emptied. For this purpose a striker assembly 70 is mounted on the top wall 54 of the outer housing 51, as shown in greater detail in Figures 2 to 4.

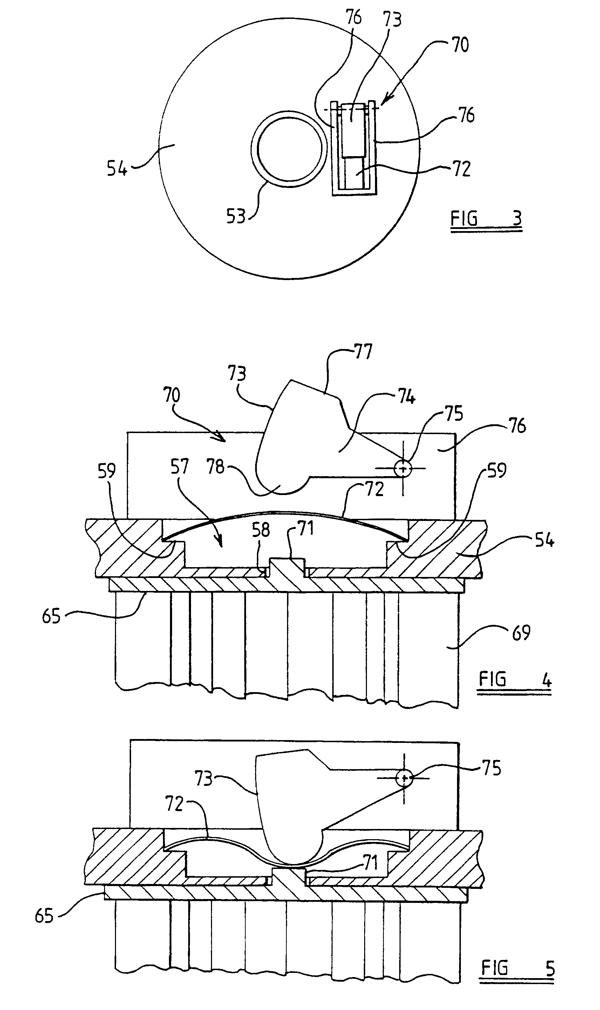

The top plate 68 of the filter body 67 is formed or provided with an upwardly extending protrusion 71 which, as will become clear below, acts as an impact member for the transmission of a striking force to the filter body 67. The top wall 54 of the outer housing 51 has a rectangular recess 57 with a central opening 58 through which the upwardly extending protrusion 71 protrudes. The recess 57 has stepped end walls which define shoulders 59 which provide location means for a resilient member in the form of a leaf spring 72. As can be seen from Figure 3, the ends of the leaf spring 72 are located in the corners at the junction between the shoulders 59 and the end walls of the recess 57, and the length of the leaf spring is such that it is held in a stressed condition in which it is bent convexly upwards as shown in Figure 3 so as to be spaced away form the protrusion 71.

The striker assembly 70 further includes an actuation member 73 which is manually operable by a user of the apparatus as and when required, preferably at least prior to emptying of the container 56. The actuation member 73 comprises a lever 74 mounted at one end on a pivot pin 75 which extends between a pair of raised lugs 76 adjacent to the longitudinal edges of the recess 57. At its other end, the lever 74 is formed with an upwardly directed finger-piece 77 and a downwardly extending nose 78.

When the actuation member 73 is operated by downward pressure applied to the finger-piece 77 there is initial resistance to movement due to the contact of the nose 78 with the leaf spring 72, but when sufficient pressure is applied to overcome that resistance to leaf spring snaps through an over-centre condition and the central region moves sharply down, as shown in Figure 4, into a downwardly convex configuration in which it impacts on the protrusion 71 carried by the top plate 68 of the filter element 66. This results in the filter body 67 being shaken briefly to dislodge the dust entrapped. The dislodged dust is then allowed to fall within the filter housing 60 and out through the openings 64 so as to be delivered over the baffle 65 into the container 56. The dust shaken from the filter body 61 falls to the bottom of the filter support 53 and then through the opening 54 and down into the dirt collection chamber 57. There it falls into the dirt and debris previously collected and at least to some extent mixes into it. In any event when the vacuum cleaner of which the assembly forms a part is used again before the container is emptied further larger dirt will be collected on top of the fine dust. This means that the fine dust is less likely to puff up in a cloud when the collection container 56 is emptied.

The leaf spring 72 is not stable with the central region in the downwardly convex configuration as shown in Figure 4, and thus it returns to its original upwardly convex configuration, as shown in Figure 3, when the finger-piece 77 is released, thereby returning the actuation member 73 to its original position, as shown in Figure 3. While only the central region of the leaf spring 72 is deflected downwardly into an unstable configuration, it would be possible for the whole leaf spring to adopt a downwardly convex configuration after passing through an over-centre condition but without reaching a stable condition by arranging for contact with the protrusion 71 to occur before a stable configuration is reached. Alternatively or additionally, the actuation member may have a separate return spring.

It will be appreciated that other forms of striker mechanism may be employed, such as a plunger that is spring biased away from the protrusion 71 and held in spaced relation thereto by detent means or the like to provide additional resistance to downward movement of the striker which yields suddenly, or a plunger that is biased into contact with the protrusion 71 and arranged to be lifted away from the protrusion by an actuation member and released, either automatically of voluntarily, so as to strike the protrusion.

While, as described above, the actuation member 73 is provided at the top of the dirt and dust separating assembly 50 (which is removable from the vacuum cleaner apparatus for emptying) and is preferably arranged so as to be accessible for operation at any time by the user, and especially when the assembly is removed for emptying, the arrangement may be such that the actuation member can be operated alternatively or additionally by means of a button provided for that purpose on the exterior of the apparatus. Alternatively it may conveniently be incorporated into a mechanism by which the assembly 50 is released from a body construction of the vacuum cleaner apparatus when it is desired to empty the collection container 56. This means that the filter 67 is always cleaned before the container 56 is emptied, and does not require the user to remember to do so.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof, within the scope of the appended claims.

## Claims

1. A dust and dirt separation assembly (50) for use in a vacuum cleaner, the assembly having a dirt collection chamber (56), a dirty air inlet (52) and a clean air outlet (53) with an airflow path therebetween, the air flow path passing through a first separation means (55) for separating larger particles of dirt from the dirty air such that it is collected in the dirt collection chamber (56), and a filter element (66) for separating smaller particles of dust from the dirty air,
**characterised in that** the assembly further includes a mechanical actuation mechanism (70) and an impact member (71), the impact member (71) being actuatable via the mechanical actuation mechanism (70) to strike the filter element (66) to dislodge the dust from the filter element and such that the dust is collected in the dirt collection chamber (56) with the larger particles of dirt, the mechanical actuation mechanism (70) being selectively manually operable.

2. An assembly according to Claim 1 **characterised in that** wherein the actuation mechanism (70) includes a snap-acting resilient element (72) which changes from a first, stable condition to a second condition when a sufficient force is applied.

3. An assembly according to Claim 2 **characterised in that** wherein the resilient element (72) is spaced from the impact member (71) until actuated, when it snaps into its second condition to strike the impact member (71) before returning to its first condition.

4. An assembly according to Claim 1, 2 or 3 **characterised in that** the filter element (66) comprises a filter body (67) made of a filter material which has non-stick properties to facilitate separation of the dust from the surface thereof when the filter element is struck.

5. An assembly according to Claim 4 **characterised in that** the filter material has a coating of PTFE or the like.

6. A vacuum cleaner incorporating an assembly according to the any of the preceding claims.

## Patentansprüche

1. Vorrichtung zur Trennung von Staub und Schmutz zur Verwendung in einem Staubsauger, wobei die Vorrichtung eine Schmutzsammelkammer (56), einen Schmutzlufteinlaß (52) und einen Reinluftauslaß (53) mit einem Luftstromweg dazwischen aufweist, wobei der Luftstromweg durch ein erstes Trennmittel (55) zum Trennen von größeren Schmutzteilchen von der schmutzigen Luft, so daß sie in der Schmutzsammelkammer (56) gesammelt werden, und ein Filterelement (66) zum Trennen von kleineren Staubteilchen von der schmutzigen Luft tritt,
**dadurch gekennzeichnet, daß** die Vorrichtung außerdem einen mechanischem Betätigungsmechanismus (70) und ein Stoßelement (71) enthält, wobei das Stoßelement (71) über den mechanischen Betätigungsmechanismus (70) aktivierbar ist, um gegen das Filterelement (66) zu schlagen und den Staub von dem Filterelement und derart zu entfernen, daß der Staub in der Schmutzsammelkammer (56) mit den größeren Schmutzteilchen gesammelt wird, wobei der mechanische Betätigungsmechanismus (70) wahlweise manuell bedienbar ist.

2. Vorrichtung nach Anspruch 1, **dadurch gekennzeichnet, daß** der Betätigungsmechanismus (70) ein elastisches Element (72) mit Schnappwirkung enthält, das von einem ersten stabilen Zustand zu einem zweiten Zustand wechselt, wenn eine ausreichende Kraft angewandt wird.

3. Vorrichtung nach Anspruch 2, **dadurch gekennzeichnet, daß** das elastische Element (72) im Abstand vom Schlagelement (71) angeordnet ist, bis es betätigt wird, wenn es in seinen zweiten Zustand schnappt, um gegen das Schlagelement (71) zu schlagen, bevor es in seinen ersten Zustand zurückkehrt.

4. Vorrichtung nach Anspruch 1, 2 oder 3, **dadurch gekennzeichnet, daß** das Filterelement (66) einen Filterkörper (67) aufweist, der aus einem Filtermaterial hergestellt ist, das keine Klebeeigenschaften aufweist, um eine Trennung des Staubs von dessen Oberfläche zu erleichtern, wenn gegen das Filterelement geschlagen wird.

5. Vorrichtung nach Anspruch 4, **dadurch gekennzeichnet, daß** das Filtermaterial eine Beschichtung aus PTFE oder dergleichen aufweist.

6. Staubsauger enthaltend eine Vorrichtung nach irgendeinem der vorangehenden Ansprüche.

## Revendications

1. Ensemble (50) de séparation de poussière et de saletés, conçu pour être utilisé dans un nettoyeur par dépression, ledit ensemble comprenant une chambre (56) collectrice de crasse, une admission (52) d'air encrassé et une sortie (53) d'air épuré, avec instauration d'un trajet de circulation d'air entre ces dernières, ledit trajet de circulation d'air passant à travers un premier moyen de séparation (55) pour séparer de grosses particules de crasse d'avec l'air encrassé, de telle sorte qu'elles soient collectées dans la chambre (56) collectrice de crasse, et un élément de filtration (66) pour séparer. des particules de crasse plus petites d'avec l'air encrassé,
**caractérisé par le fait que** l'ensemble comprend, en outre, un dispositif (70) d'actionnement mécanique et une pièce de percussion (71), ladite pièce de percussion (71) pouvant être actionnée, par l'intermédiaire dudit dispositif (70) d'actionnement mécanique, pour venir heurter l'élément de filtration (66) afin de déloger la poussière dudit élément de filtration, et de façon telle que la poussière soit collectée dans la chambre (56) collectrice de crasse, avec les grosses particules de crasse, le dispositif (70) d'actionnement mécanique pouvant être sélectivement mis en action à la main.

2. Ensemble selon la revendication 1, **caractérisé par le fait que** le dispositif d'actionnement (70) comprend un élément élastique (72) agissant par déclic et passant, lorsqu'une force suffisante est appliquée, d'une première condition stable à une seconde condition.

3. Ensemble selon la revendication 2, **caractérisé par le fait que** l'élément élastique (72) est espacé de la pièce de percussion (71) jusqu'à ce qu'il soit actionné lorsqu'il parvient, par déclic, à sa seconde condition destinée à venir heurter ladite pièce de percussion (71), avant de retourner à sa première condition.

4. Ensemble selon la. revendication 1, 2 ou 3, **caractérisé par le fait que** l'élément de filtration (66) comprend un corps filtrant (67) constitué d'un matériau filtrant doué de propriétés non adhérentes, pour favoriser une séparation de la poussière d'avec sa surface lorsque ledit élément de filtration est totalement engorgé.

5. Ensemble selon la revendication 4, **caractérisé par le fait que** le matériau filtrant possède un revêtement en PTFE ou en un matériau similaire.

6. Nettoyeur par dépression, intégrant un ensemble selon l'une quelconque des revendications précédentes.
